# EUROPÄISCHE PATENTSCHRIFT

(11) **EP 3 127 208 B1**
(45) Veröffentlichungstag und Bekanntmachung des Hinweises auf die Patenterteilung: **19.06.2019**
(21) Anmeldenummer: 15712844.8
(22) Anmeldetag: 20.03.2015
(51) Int. Cl.: H02J 7/00

(54) **VERFAHREN ZUM BATTERIEMANAGEMENT EINER BATTERIE MIT EINEM LADEZUSTANDSAUSGLEICHSSYSTEM UND BATTERIEMANAGEMENTSYSTEM**
METHOD FOR BATTERY MANAGEMENT OF A BATTERY WITH A CHARGE STATE COMPENSATION SYSTEM AND BATTERY MANAGEMENT SYSTEM
PROCÉDÉ DE GESTION D'UNE BATTERIE ÉQUIPÉE D'UN SYSTÈME D'ÉGALISATION D'ÉTAT DE CHARGE ET SYSTÈME DE GESTION DE BATTERIE

(30) Priorität: 31.03.2014 DE 102014205942
(43) Veröffentlichungstag der Anmeldung: 08.02.2017
(73) Patentinhaber: Robert Bosch GmbH, 70442 Stuttgart (DE); Samsung SDI Co., Ltd., Yongin-si, Gyeonggi-do 446-577 (KR)
(72) Erfinder: BROCHHAUS, Christoph, 52072 Aachen (DE)
(74) Vertreter: Bee, Joachim
(86) Internationale Anmeldenummer: PCT/EP2015/055870
(87) Internationale Veröffentlichungsnummer: WO 2015/150112

(56) Entgegenhaltungen:
- EP-A1- 1 042 138
- EP-A1- 2 485 293

## Beschreibung

### Stand der Technik

Die Erfindung betrifft ein Verfahren zum Batteriemanagement einer Batterie, die mehrere Batteriezellen aufweist und die mit einem Ladezustandsausgleichssystem und mit einem Batteriemanagementsystem zur Überwachung der Batteriefunktionalität ausgestattet ist. Die Erfindung betrifft zudem ein Computerprogramm, ein Batteriemanagementsystem, ein Batteriesystem und ein Kraftfahrzeug, welche zur Durchführung des Verfahrens eingerichtet sind.

Elektronische Steuergeräte werden im automobilen Umfeld heutzutage in zunehmender Zahl eingesetzt. Beispiele hierfür sind Motorsteuergeräte und Steuergeräte für ABS oder den Airbag. Für elektrisch angetriebene Fahrzeuge ist ein heutiger Forschungsschwerpunkt die Entwicklung von leistungsfähigen Batteriepacks mit zugehörigen Batteriemanagementsystemen, d.h. Steuergeräten, welche mit einer Software zur Überwachung der Batteriefunktionalität ausgestattet sind. Batteriemanagementsysteme gewährleisten unter anderem die sichere und zuverlässige Funktion der eingesetzten Batteriezellen und Batteriepacks. Sie überwachen und steuern Ströme, Spannungen, Temperaturen, Isolationswiderstände und weitere Größen für einzelne Zellen und/oder den ganzen Batteriepack. Mit Hilfe dieser Größen lassen sich Managementfunktionen realisieren, die die Lebensdauer, Zuverlässigkeit und Sicherheit des Batteriesystems steigern.

Batteriemanagementsysteme bestehen aus einer Vielzahl von Steuergeräten, auf denen individuelle Softwarefunktionalitäten ablaufen. Abhängig von der Anzahl der Batteriezellen, der Anzahl der Sensoren und der Verteilung der Batteriemodule auf verschiedene Bauräume im Kraftfahrzeug, ergibt sich dabei eine Steuergeräte-Topologie mit einem Hauptsteuergerät und mehreren untergeordneten Sensorsteuergeräten für die Erfassung der Messwerte direkt an den einzelnen Batteriezellen und Batteriemodulen. Die erfassten Daten werden zwischen den Steuergeräten über einen Kommunikationskanal ausgetauscht. Zum Ausgleichen von Spannungen, zum Beispiel bedingt durch unterschiedliche Abnützung oder Alterung der Batteriezellen, ist es bekannt, einen Ladezustandsausgleich vorzunehmen (*Cell Balancing*), bei dem die Batteriezellen mit hohem Ladungsstand an die Batteriezellen mit niedrigem Ladungsstand angeglichen werden. Hierfür werden bedarfsweise Ströme über Ladezustandsausgleichswiderstände (sogenannte Balancing-Widerstände) geleitet und die Batteriezellen gesteuert entladen. Den Ladezustandsausgleichsbedarf bestimmt das Hauptsteuergerät. Dieses gibt die Anforderung für das Ausführen des Ladezustandsausgleichs an die Sensorsteuergeräte weiter.

DE 10 2008 002 100 A1 zeigt ein Verfahren zum Ladezustandsausgleich von Fahrzeugbatterien, wobei der Ladezustandswert der Batteriezellen durch eine Spannungsmessung vorzugsweise in einer Ruhephase ermittelt wird. Als geeignete Zeitpunkte werden beispielsweise unmittelbar nach einer Aktion "Zündung ein" oder nach einer Aktivierung eines Steuergeräts betrachtet, das die Messung durchführt. Aus den Ladezuständen der einzelnen Batteriezellen wird eine Ladungsmenge berechnet, um die jede Zelle entladen werden muss, bis der Ladezustand demjenigen der schwächsten

Dokument EP 2485293 A1 zeigt ein Verfahren zum Batteriemanagement gemäß der Präambel von Anspruch 1.

### Offenbarung der Erfindung

Erfindungsgemäss wird ein Verfahren nach Anspruch 1 sowie ein Batteriemanagementsystem nach Anspruch 8 bereitgestellt.

Vorteilhaft wird eine Historie über durchgeführte Ladezustandsausgleiche geführt und in den Sensorsteuergeräten dezentral gespeichert. Bei einer Batterie, welche mehrere Batteriemodule aufweist und bei welcher jedem Batteriemodul ein Sensorsteuergerät zugeordnet ist, ergibt sich der Vorteil, dass die Informationen über durchgeführte Ladezustandsausgleiche beim Ausbau eines Batteriemoduls ausgelesen und analysiert werden können. Das Hauptsteuergerät ist hierzu nicht nötig. Externen Testpersonen können auf diese Weise sehr einfach wesentliche Informationen zugänglich gemacht werden.

Die Informationen umfassen Häufigkeitswerte von Temperaturwechseln und optional Zeitraum-Werte der Ladezustandsausgleiche, wobei diese Aufzählung nicht abschließend sein muss. Für die Diagnose der Batterie sind diese Informationen von erheblicher Bedeutung. Jedes Einschalten eines Ladezustandsausgleichswiderstands führt bereits ab einer geringen Dauer zu einer Erhitzung desselben. Nach dem Abschalten kühlt der Ladezustandsausgleichswiderstand wieder ab. Die Anzahl der Temperaturwechsel wirkt sich auf die Lebensdauer der Bauteile aus, insbesondere auf die Lötstellen, welche durch die Temperaturwechsel strapaziert werden.

Dass die Anzahl von Temperaturwechseln nicht mit der Gesamtzahl der durchgeführten Ladezustandsausgleiche korrespondieren muss, ergibt sich aus Folgendem: Es gibt zahlreiche Faktoren, die den Ladezustandsausgleich beeinflussen, beispielsweise die Temperatur der beteiligten Bauteile, insbesondere die Temperatur der Batteriezelle, und auch eine mögliche Unterspannung einer Batteriezelle. Diese Faktoren verursachen in einigen Fällen ungeplante Abbrüche des Ladezustandsausgleichs, beispielsweise aufgrund einer Übertemperatur des Ladezustandsausgleichswiderstands. Kühlt sich der Ladezustandsausgleichswiderstand wieder unter einen Schwellenwert ab, wird der Ladezustandsausgleich gegebenenfalls wieder aufgenommen. Die genannten Faktoren haben einen direkten Einfluss auf die Dauer des Ladezustandsausgleichs oder die Anzahl der Temperaturwechsel. Das vorgestellte Verfahren verwaltet sehr effektiv die Informationen über Temperaturwechsel und die Aktivierungsdauer aller verbauten Ladezustandsausgleichswiderstände.

Es wurde erkannt, dass die betreffenden Informationen über die Ladezustandsausgleiche keine kritischen Daten darstellen, sodass das Hauptsteuergerät bei einem Fahrzyklusbeginn diese Informationen nicht notwendigerweise parat haben muss. Nach einer bevorzugten Ausführungsform ermittelt das Hauptsteuergerät den Ladezustandsausgleichsbedarf der Batteriezellen bei einem Fahrzyklusende, kommuniziert diesen an die Sensorsteuergeräte und schaltet sie hiernach ab. Die Informationen über durchgeführte Ladezustandsausgleiche können nun nur noch von den Sensorsteuergeräten erfasst werden, da nur die auf diesen Steuergeräten laufende Software die vollständigen Informationen über die Dauer und den Verlauf des Ladezustandsausgleichs und die Temperaturwechsel erfassen kann. Das Hauptsteuergerät ist während des Ladezustandsausgleichs deaktiviert und kann keinerlei Informationen diesbezüglich sammeln. Die Sensorsteuergeräte führen den Ladezustandsausgleich autonom durch und verwalten die Informationen über die durchgeführten Ladezustandsausgleiche. Bei dem vorgeschlagenen Konzept liegen dem Hauptsteuergerät die Informationen über die Nutzung der Ladezustandsausgleichwiderstände während des Fahrzyklus typischerweise nur aus dem vorletzten Fahrzyklus vor.

Einen Beginn und ein Ende eines Fahrzyklus auslösende Ereignisse können beispielsweise Ladeimpulse sein, ein Zustandswechsel der Batterie von "Betrieb" (*Drive*) nach "Laden" (*Charge*), Auswertung eines Signals "Laden aktiv" oder eine Auswertung eines Zustandswechsels an einem Zündungssignal.

Nach einer Ausführungsform werden die im nicht-flüchtigen Speicher der Sensorsteuergeräte gespeicherten Informationen über durchgeführte Ladezustandsausgleiche bei einem Fahrzyklusende an das Hauptspeichergerät übertragen. Hierdurch wird insbesondere eine Verzögerung des Systemstarts vermieden. Alternativ hierzu kann vorgesehen sein, die Informationen über durchgeführte Ladezustandsausgleiche innerhalb, d. h. verzahnt mit der weiteren Kommunikation zwischen den Sensorsteuergeräten und dem Hauptsteuergerät zu übertragen. Zur Übertragung der Daten wird eine freie Kommunikationsbandbreite genutzt, sobald sie verfügbar ist. Hierdurch wird der Startvorgang des Hauptsteuergeräts nicht verzögert, vorteilhaft liegt die Information dem Hauptsteuergerät früher vor.

Nach einer Ausführungsform speichert das Hauptsteuergerät die Informationen über durchgeführte Ladezustandsausgleiche in einem zweiten nicht-flüchtigen Speicher. Im Hauptsteuergerät wird dabei ein Gesamthistogramm gebildet, welches einen Gesamtüberblick über den Einsatz der Ladezustandsausgleichswiderstände erlaubt. Im Rahmen von Gewährleistungsansprüchen kann das Gesamthistogramm aus dem nicht-flüchtigen Speicher des Hauptsteuergeräts ausgelesen und zur Auswertung der Nutzung des Ladezustandsausgleichssystems herangezogen werden.

Nach einer Ausführungsform aktualisiert das Hauptsteuergerät bei einem Austausch von Batteriezellen, Batteriemodulen und dem zugeordneten Sensorsteuergerät die Informationen über durchgeführte Ladezustandsausgleiche, z. B. in Form eines *Resets* der betroffenen Einheiten, insbesondere Speichereinheiten.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Software-Modul, eine Software-Routine oder eine Software-Subroutine zur Implementierung eines Batteriemanagementsystems eines Kraftfahrzeuges handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, beispielsweise auf einem tragbaren Speicher, wie einer CD-ROM, einer DVD, einer Blu-Ray Disc, einem USB-Stick oder einer Speicherkarte. Zusätzlich oder alternativ dazu kann das Computerprogramm auf einer Computereinrichtung, wie etwa auf einem Server oder einem Cloud-Server, zum Herunterladen bereitgestellt werden, beispielsweise über ein Datennetzwerk, wie das Internet, oder über eine Kommunikationsverbindung, wie eine Telefonleitung oder eine Drahtlosverbindung.

Bevorzugt ist das Batteriemanagementsystem zur Durchführung der hierin beschriebenen Verfahren ausgebildet und/oder eingerichtet. Dementsprechend gelten die im Rahmen der Verfahren beschriebenen Merkmale entsprechend für das Batteriemanagementsystem und umgekehrt die im Rahmen des Batteriemanagementsystems beschriebenen Merkmale entsprechend für die Verfahren.

Die Einheiten des Batteriemanagementsystems sind als funktionale Einheiten zu verstehen, die nicht notwendigerweise physikalisch voneinander getrennt sind. So können mehrere Einheiten des Batteriemanagementsystems in einer einzigen physikalischen Einheit realisiert sein, etwa wenn mehrere Funktionen in Software implementiert sind. Weiterhin können die Einheiten des Batteriemanagementsystems auch in Hardware, beispielsweise durch anwendungsspezifische integrierte Schaltkreise (ASIC, *Application Specific Integrated Circuit*) oder in Speichereinheiten realisiert sein. Bevorzugt sind insbesondere Einheiten zum Ermitteln und Speichern der Informationen über Ladezustandsausgleiche als Software oder ASIC im Batteriemanagementsystem implementiert.

Erfindungsgemäß wird außerdem ein Batteriesystem mit einer Batterie, welche mehrere Batteriezellen und ein Ladezustandsausgleichssystem umfasst, und einem derartigen Batteriemanagementsystem bereitgestellt. Die Batterie kann insbesondere eine Lithium-Ionen-Batterie oder eine Nickel-Metallhydrid-Batterie sein und mit einem Antriebssystem eines Kraftfahrzeugs verbindbar sein.

Die Begriffe "Batterie" und "Batterieeinheit" werden in der vorliegenden Beschreibung dem üblichen Sprachgebrauch angepasst für Akkumulator bzw. Akkumulatoreinheit verwendet. Die Batterie umfasst eine oder mehrere Batterieeinheiten, womit eine Batteriezelle, ein Batteriemodul, einen Modulstrang oder ein Batteriepack bezeichnet sein kann. In der Batterie sind die Batteriezellen vorzugsweise räumlich zusammengefasst und schaltungstechnisch miteinander verbunden, beispielsweise seriell oder parallel zu Modulen verschaltet. Mehrere Module können sogenannte Batteriedirektkonverter (BDC, *Battery Direct Converter*) bilden, und mehrere Batteriedirektkonverter einen Batteriedirektinverter (BDI, *Battery Direct Inverter*). Bevorzugt weist die Batterie mehrere Batteriemodule auf, wobei jedem Batteriemodul genau ein Sensorsteuergerät zugeordnet ist.

Erfindungsgemäß wird außerdem ein Kraftfahrzeug mit einem derartigen Batteriesystem zur Verfügung gestellt, wobei dessen Batterie mit einem Antriebssystem des Kraftfahrzeugs verbunden ist. Das Kraftfahrzeug kann als reines Elektrofahrzeug ausgestaltet sein und ausschließlich ein elektrisches Antriebssystem umfassen. Alternativ kann das Kraftfahrzeug als Hybridfahrzeug ausgestaltet sein, das ein elektrisches Antriebssystem und einen Verbrennungsmotor umfasst. In einigen Varianten kann vorgesehen sein, dass die Batterie des Hybridfahrzeugs intern über einen Generator mit überschüssiger Energie des Verbrennungsmotors geladen werden kann. Extern aufladbare Hybridfahrzeuge (PHEV, *Plug-in Hybrid Electric Vehicle*) sehen zusätzlich die Möglichkeit vor, die Batterie über das externe Stromnetz aufzuladen. Bei derart ausgestalteten Kraftfahrzeugen umfasst der Fahrzyklus einen Fahrbetrieb und/oder einen Ladebetrieb als Betriebsphasen.

### Vorteile der Erfindung

Das erfindungsgemäße Verfahren und das Batteriemanagementsystem stellen Informationen über die Nutzung des Ladezustandsausgleichssystems bereit, insbesondere über die Nutzung der Ladezustandsausgleichswiderstände, wobei auch ein eventueller Austausch von Batteriemodulen und/oder Sensorsteuergeräten berücksichtigt wird. Die Informationen über die durchgeführten Ladezustandsausgleiche werden dauerhaft in den Sensorsteuergeräten abgelegt, um bei deren Ausbau ausgelesen und analysiert werden zu können.

Besonders vorteilhaft ist, dass derartige Informationen auch dann gesammelt werden, wenn das Hauptsteuergerät abgeschaltet ist, beispielsweise im Nachlauf zu einem Fahrzyklus.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: ein Kraftfahrzeug mit einem Batteriesystem,
- Figur 2A bis 2D: Histogramme von Sensorsteuergeräten und
- Figur 3A und 3B: Histogramme eines Hauptsteuergeräts.

In der nachfolgenden Beschreibung der Ausführungsbeispiele der Erfindung werden gleiche oder ähnliche Komponenten mit gleichen oder ähnlichen Bezugszeichen bezeichnet, wobei in Einzelfällen auf eine wiederholte Beschreibung dieser Komponenten verzichtet wird. Die Figuren stellen den Gegenstand der Erfindung nur schematisch dar.

### Ausführungsformen der Erfindung

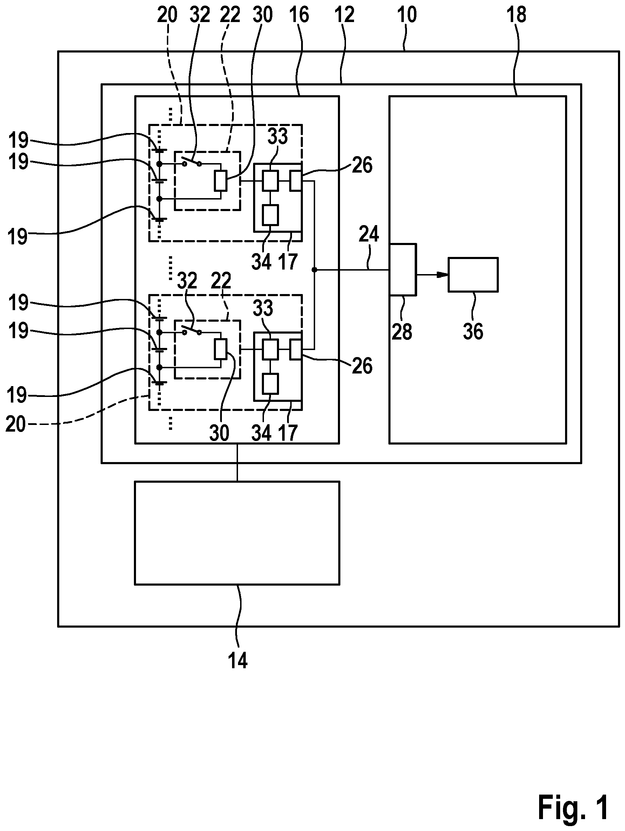

Figur 1 zeigt ein zumindest teilweise elektrisch angetriebenes Kraftfahrzeug 10 mit einem Batteriesystem 12.

Das Kraftfahrzeug 10 der Figur 1 kann als rein elektrisch angetriebenes Fahrzeug oder als Hybridfahrzeug, das zusätzlich einen Verbrennungsmotor aufweist, ausgestaltet sein. Dazu ist das Kraftfahrzeug 10 mit einem elektrischen Antriebssystem 14 ausgerüstet, das das Kraftfahrzeug 10 über einen Elektromotor (nicht dargestellt) zumindest teilweise elektrisch antreibt.

Die elektrische Energie wird von einer Batterie 16 bereitgestellt. Die Batterie 16 umfasst mehrere Batteriezellen 19 oder Akkumulatorzellen, zum Beispiel Lithiumionenzellen mit einem Spannungsbereich von 2,8 V bis 4,2 V. Die Batteriezellen 19 sind in Gruppen zu Batteriemodulen 20 zusammengefasst, und hierbei in Serie und teilweise zusätzlich parallel geschaltet, um die geforderten Leistungs- und Energiedaten mit der Batterie 16 zu erzielen.

Die Batterie 16 ist Teil eines Batteriesystems 12, das außerdem ein Batteriemanagementsystem umfasst. Das Batteriemanagementsystem umfasst ein Hauptsteuergerät 18 und mehrere Sensorsteuergeräte 17, welche den Batteriemodulen 20 zugeordnet sind.

Das Hauptsteuergerät 18 und die Sensorsteuergeräte 17 stehen über einen Kommunikationskanal 24 miteinander in Verbindung, etwa einen SPI Bus (*Serial Peripheral Interface Bus*) oder einen CAN Bus (*Controller Area Network Bus*), über welchen üblicherweise Zellüberwachungseinheiten und Modulüberwachungseinheiten (nicht dargestellt) Betriebsparameter wie Spannungen, Stromstärken oder Temperaturen einzelner Batteriezellen 19 oder einzelner Batteriemodule 20 als Messwerte erfassen und dem Hauptsteuergerät 18 zur Überwachung und Steuerung der Batteriefunktionalität bereitstellen. Zur Kommunikation sind den Batteriemodulen 20 und dem Hauptsteuergerät 18 Kommunikationseinheiten 26, 28 zugeordnet.

Die Batterie 16, d.h. im dargestellten Ausführungsbeispiel jedes Batteriemodul 20, weist ein Ladezustandsausgleichssystem 22 auf, welches im dargestellten Ausführungsbeispiel einen resistiven Ladezustandsausgleich ausführt. Jeder Batteriezelle 19 ist hierzu ein Schalter 32 und ein Ladezustandsausgleichswiderstand 30 zugeordnet, wobei der Schalter 32 vom Sensorsteuergerät 17 betätigbar ist. Die Erfindung ist jedoch nicht auf dieses Ausführungsbeispiel beschränkt, sondern kann ebenso bei induktiven oder kapazitiven Ladezustandsausgleichsverfahren eingesetzt werden.

Jedes Sensorsteuergerät 17 umfasst die Kommunikationseinheit 26 und eine Ladezustandsausgleichssteuereinheit 33. Die Ladezustandsausgleichssteuereinheit 33 ist eingerichtet, Informationen von durchgeführten Ladezustandausgleichen, insbesondere die Anzahl von Temperaturwechseln und die kumulierte Dauer der Ladezustandsausgleiche zu erfassen und in einem ersten nicht-flüchtigen Speicher 34 abzuspeichern. Der erste nicht-flüchtige Speicher 34 ist beispielsweise ein EEPROM (*Electrically Eresable Programmable Read-Only Memory*), in dem die Informationen dauerhaft gespeichert werden.

Das Hauptsteuergerät 18 umfasst einen zweiten nicht-flüchtigen Speicher 36, in welchem die von den Sensorsteuergeräten 17 ermittelten und gespeicherten Informationen über durchgeführte Ladezustandsausgleiche dauerhaft abgespeichert werden.

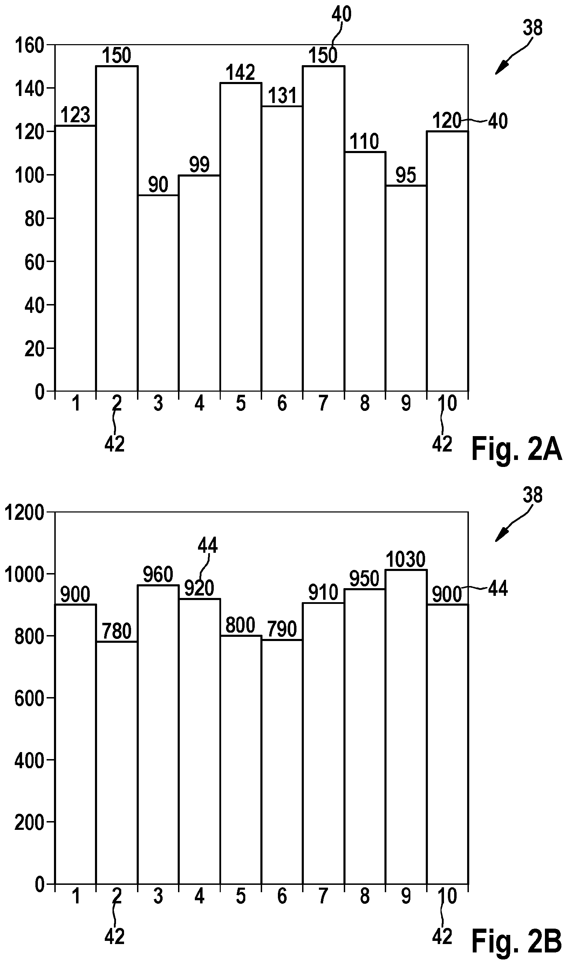

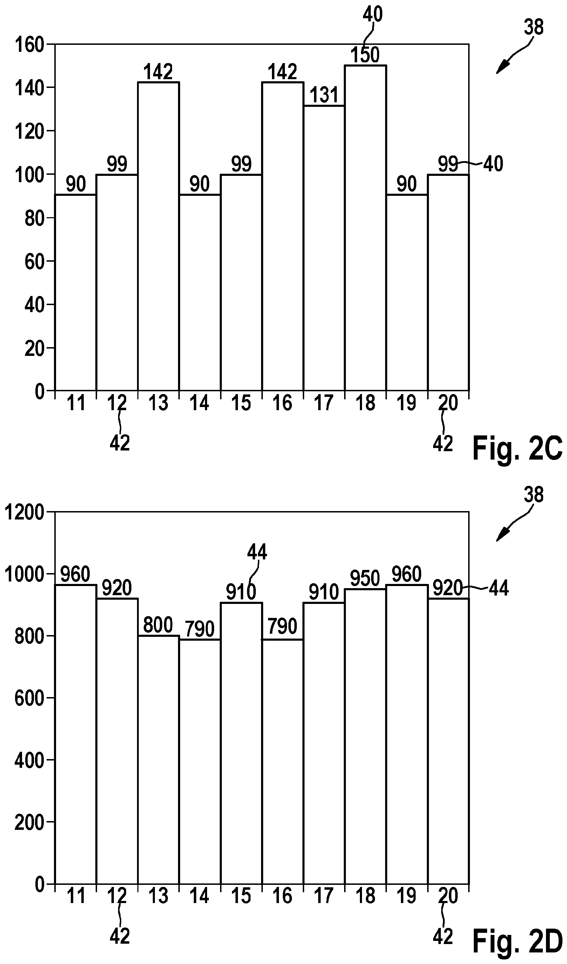

Figur 2A bis 2D zeigen Histogramme 38, wobei Figur 2A und Figur 2B einem ersten Sensorsteuergerät 17 zugeordnet sind und Figur 2C und Figur 2D einem zweiten Sensorsteuergerät 17 zugeordnet sind. Die Histogramme 38 stellen die von den Sensorsteuergeräten 17 abgespeicherten Informationen von durchgeführten Ladezustandsausgleichen dar. Die in Figur 2A bis 2D dargestellten Informationen können aus den ersten nicht-flüchtigen Speichern 34 der Sensorsteuergeräte 17 ausgelesen und analysiert werden.

Das Histogramm 38 in Figur 2A stellt für jeden Ladezustandsausgleichswiderstand 30 eine gemessene Anzahl von Temperaturwechseln dar. Hierzu werden Häufigkeitswerte 40 über Identifikatoren 42 der Ladezustandsausgleichswiderstände 30 abgetragen.

Figur 2B stellt die kumulierte Dauer von Ladezustandsausgleichen für die Ladezustandsausgleichswiderstände 30 dar. Hierzu werden Zeitraum-Werte 44 über die Identifikatoren 42 der Ladezustandsausgleichswiderstände 30 abgetragen.

Figur 2C und Figur 2D stellen die entsprechenden Informationen über die Anzahl von Temperaturwechseln und die kumulierte Dauer der Ladezustandsausgleiche für Ladezustandsausgleichswiderstände 30 des zweiten Sensorsteuergeräts 17 dar.

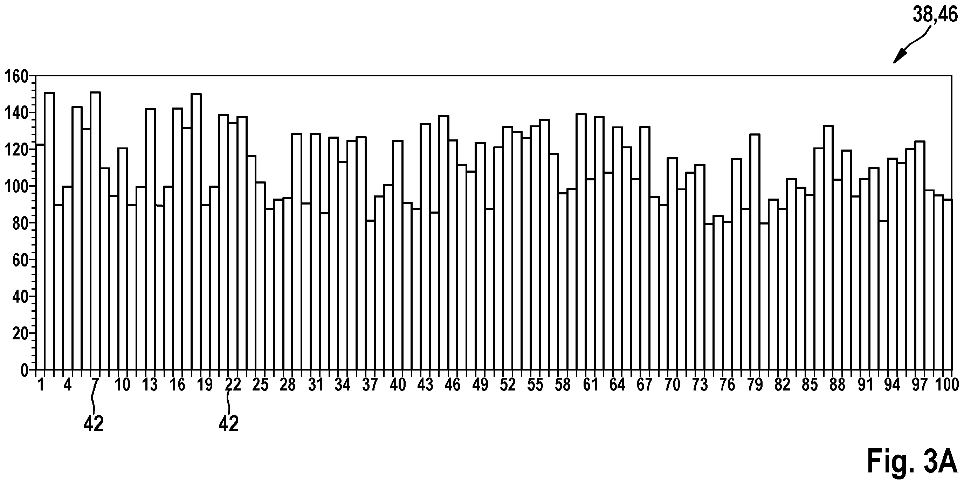

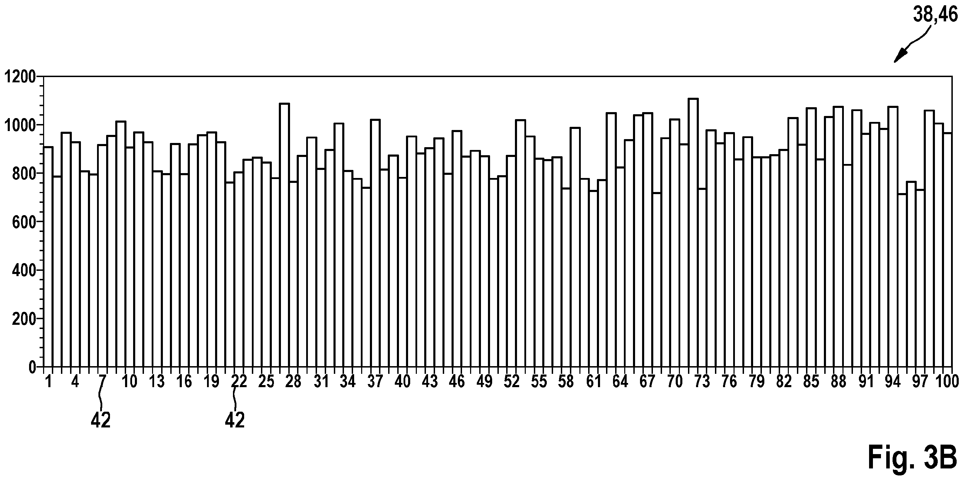

Figur 3A und Figur 3B stellen Informationen über die Anzahl von Temperaturwechseln und die kumulierte Dauer der Ladezustandsausgleiche aller Ladezustandsausgleichswiderstände 30 der Batterie 16 dar. Die Identifikatoren 42 der einzelnen Ladezustandsausgleichswiderstände 30 sind innerhalb der Batterie 16 eindeutig vergeben. Die Informationen im Hauptsteuergerät 18 bilden Gesamthistogramme 46, welche aus dem zweiten nicht-flüchtigen Speicher 36 des Hauptsteuergeräts 18 ausgelesen und analysiert werden können.

In der Praxis kann ein Verfahren wie folgendermaßen umgesetzt werden:
Zu Beginn des Fahrzyklus fährt das Hauptsteuergerät 18 hoch. Die Informationen über die Ladezustandsausgleichswiderstände 30 im Hauptsteuergerät 18 stammen während des Normalbetriebs aus dem vorletzten Fahrzyklus, da die Informationen über den Ladzustandsausgleich nach dem letzten Fahrzyklus erst im Nachlauf des Fahrzyklus von den Sensorsteuergeräten 17 übertragen werden.

Am Ende des Fahrzyklus fordert das Hauptsteuergerät 18 von den Sensorsteuergeräten 17 den aktuellen Stand der Nutzungsinformationen der Ladezustandsausgleichswiderstände 30 an. Danach schickt das Hauptsteuergerät 18 den Befehl zum Durchführen des Ladezustandsausgleichs an die Sensorsteuergeräte 17 und schaltet sich ab. Der Ladezustandsausgleich wird bei abgeschaltetem Hauptsteuergerät 18 von den Sensorsteuergeräten 17 autonom durchgeführt.

Am Ende des nächsten Fahrzyklus fordert das Hauptsteuergerät 18 von den Sensorsteuergeräten 17 wiederum den aktuellen Stand der Nutzungsinformationen der Ladezustandsausgleichswiderstände 30 an. Hierbei werden die Informationen wie nach dem vorigen Fahrzyklus im ersten nicht-flüchtigen Speicher 34 der Sensorsteuergeräte 17 gespeichert und hiernach übertragen. Daraufhin schickt das Hauptsteuergerät 18 wiederum den Befehl zur Durchführung des Ladezustandsausgleichs an die Sensorsteuergeräte 17 und schaltet sich ab. Die Anforderung wird bei abgeschaltetem Hauptsteuergerät 18 autonom durchgeführt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Batteriemanagement eines Batteriesystems (12), das eine Batterie (16) mit mehreren Batteriezellen (19) aufweist, wobei die Batteriezellen (19) in Gruppen zu Batteriemodulen (20) zusammengefasst sind und jedes Batteriemodul (20) ein Ladezustandsausgleichssystem (22) aufweist, wobei das Batteriesystem (12) mit einem Batteriemanagementsystem zur Überwachung der Batteriefunktionalität ausgestattet ist, wobei das Batteriemanagementsystem mehrere Sensorsteuergeräte (17), welche den Batteriemodulen (20) zugeordnet sind, und ein Hauptsteuergerät (18) umfasst, welche über einen Kommunikationskanal (24) miteinander in Verbindung stehen, und wobei das Ladezustandsausgleichssystem (22) eine Anzahl von Ladezustandsausgleichswiderständen (30) aufweist, welche über die Sensorsteuergeräte (17) für einen Ladezustandsausgleich der Batteriezellen (19) in Betrieb genommen werden,
**dadurch gekennzeichnet, dass** die Sensorsteuergeräte (17) Informationen über durchgeführte Ladezustandsausgleiche in erste nicht-flüchtige Speicher (34) der Sensorsteuergeräte (17) speichern, wobei
die Informationen Häufigkeitswerte (40) von Temperaturwechseln für die einzelnen Ladeausgleichswiderstände bei Ladezustandsausgleichen umfassen.

2. Verfahren nach Anspruch 1, **dadurch gekennzeichnet, dass** die Informationen Zeitraum-Werte (44) der Ladezustandsausgleiche umfassen.

3. Verfahren nach einem der vorhergehenden Ansprüche, **dadurch gekennzeichnet, dass** bei einem Fahrzyklusende das Hauptsteuergerät (18) den Ladezustandsausgleichsbedarf der Batteriezellen (19) ermittelt, an die Sensorsteuergeräte (17) kommuniziert und sich hiernach abschaltet.

4. Verfahren nach einem der vorhergehenden Ansprüche, **dadurch gekennzeichnet, dass** die Sensorsteuergeräte (17) die in den ersten nicht-flüchtigen Speicher (34) gespeicherten Informationen über durchgeführte Ladezustandsausgleiche an das Hauptsteuergerät (18) bei einem Fahrzyklusende übertragen.

5. Verfahren nach einem der vorhergehenden Ansprüche, **dadurch gekennzeichnet, dass** das Hauptsteuergerät (18) die Informationen über durchgeführte Ladezustandsausgleiche in einem zweiten nicht-flüchtigen Speicher (36) speichert.

6. Verfahren nach einem der vorhergehenden Ansprüche, **dadurch gekennzeichnet, dass** das Hauptsteuergerät (18) bei einem Austausch von Ladezustandsausgleichswiderständen (30) die Informationen über durchgeführte Ladezustandsausgleiche aktualisiert.

7. Computerprogramm zur Durchführung eines der Verfahren nach einem der Ansprüche 1 bis 6, wenn das Computerprogramm auf einer programmierbaren Computereinrichtung durchgeführt wird.

8. Batteriemanagementsystem zur Überwachung der Batteriefunktionalität eines Batteriesystems (12), das eine Batterie (16) mit mehreren Batteriezellen aufweist, wobei die Batteriezellen in Gruppen zu Batteriemodulen zusammengefasst sind und jedes Batteriemodul ein Ladezustandsausgleichssystem aufweist, wobei das Batteriemanagementsystem mehrere Sensorsteuergeräte (17), welche den Batteriemodulen zugeordnet sind, und ein Hauptsteuergerät (18) umfasst, welche über einen Kommunikationskanal (24) miteinander in Verbindung stehen, und wobei das Ladezustandsausgleichssystem (22) eine Anzahl von Ladezustandsausgleichswiderständen (30) aufweist, welche über die Sensorsteuergeräte (17) für einen Ladezustandsausgleich der Batteriezellen (19) in Betrieb genommen werden,
**dadurch gekennzeichnet, dass** die Sensorsteuergeräte (17) erste nicht-flüchtige Speicher (34) und Ladezustandsausgleichssteuereinheiten (33) aufweisen, wobei die Ladezustandsausgleichssteuereinheiten (33) zum Speichern von Informationen über durchgeführte Ladezustandsausgleiche in die ersten nicht-flüchtigen Speicher (34) eingerichtet sind, wobei die Informationen Häufigkeitswerte (40) von Temperaturwechseln für die einzelnen Ladeausgleichswiderstände bei Ladezustandsausgleichen umfassen.

9. Batteriesystem (12) mit einer Batterie (16), die mehrere Batteriezellen (19) und ein Ladezustandsausgleichssystem (22) aufweist, und mit einem Batteriemanagementsystem nach Anspruch 8.

10. Kraftfahrzeug (10) mit einem Batteriesystem (12), welches eine Batterie (16), die mehrere Batteriezellen (19) aufweist und mit einem Ladezustandsausgleichssystem (22) ausgestattet ist, und ein Batteriemanagementsystem nach Anspruch 8 aufweist.

## Claims

1. Method for battery management of a battery system (12) which has a battery (16) having multiple battery cells (19), wherein the battery cells (19) are combined in groups to form battery modules (20) and each battery module (20) has a charge state balancing system (22), wherein the battery system (12) is equipped with a battery management system for monitoring the battery functionality, wherein the battery management system includes multiple sensor control devices (17), which are assigned to the battery modules (20), and a primary control device (18) which are interconnected via a communication channel (24), and wherein the charge state balancing system (22) has a number of charge state balancing resistors (30) which are placed into operation via the sensor control devices (17) for charge state balancing of the battery cells (19), **characterized in that** the sensor control devices (17) store information about implemented charge state balancing in first nonvolatile memories (34) of the sensor control devices (17), wherein the information includes frequency values (40) of temperature changes for the individual charge balancing resistors in the case of charge state balancing.

2. Method according to Claim 1, **characterized in that** the information includes time period values (44) of the charge state balancing.

3. Method according to one of the preceding claims, **characterized in that** the primary control device (18) ascertains the charge state balancing requirement of the battery cells (19) at the end of a driving cycle, communicates it to the sensor control devices (17), and deactivates itself thereafter.

4. Method according to one of the preceding claims, **characterized in that** the sensor control devices (17) transmit the information stored in the first nonvolatile memory (34) about implemented charge state balancing to the primary control device (18) at the end of a driving cycle.

5. Method according to one of the preceding claims, **characterized in that** the primary control device (18) stores the information about implemented charge state balancing in a second nonvolatile memory (36).

6. Method according to one of the preceding claims, **characterized in that** the primary control device (18) updates the information about implemented charge state balancing during an exchange of charge state balancing resistors (30).

7. Computer program for carrying out one of the methods according to one of Claims 1 to 6, if the computer program is executed on a programmable computer device.

8. Battery management system for monitoring the battery functionality of a battery system (12) which has a battery (16) having multiple battery cells, wherein the battery cells are combined in groups to form battery modules and each battery module has a charge state balancing system, wherein the battery management system has multiple sensor control devices (17), which are aasigned to the battery modules, and a primary control device (18) which are interconnected via a communication channel (24), and wherein the charge state balancing system (22) has a number of charge state balancing resistors (30) which are placed into operation via the sensor control devices (17) for charge state balancing of the battery cells (19), **characterized in that** the sensor control devices (17) have first nonvolatile memories (34) and charge state balancing control units (33), wherein the charge state balancing control units (33) are configured for storing information about implemented charge state balancing in the first nonvolatile memories (34), wherein the information includes frequency values (40) of temperature changes for the individual charge balancing resistors in the case of charge state balancing.

9. Battery system (12) including a battery (16) which has multiple battery cells (19) and a charge state balancing system (22), and including a battery management system according to Claim 8.

10. Motor vehicle (10) including a battery system (12) which has a battery (16) which has multiple battery cells (19) and is equipped with a charge state balancing system (22), and a battery management system according to Claim 8.

## Revendications

1. Procédé de gestion de batterie d'un système de batterie (12), qui possède une batterie (16) comprenant plusieurs cellules de batterie (19),
les cellules de batterie (19) étant rassemblées en groupes en des modules de batterie (20) et chaque module de batterie (20) possédant un système d'équilibrage d'état de charge (22),
le système de batterie (12) étant équipé d'un système de gestion de batterie destiné à surveiller la fonctionnalité des batteries, le système de gestion de batterie comprenant plusieurs contrôleurs de capteur (17), qui sont associés aux modules de batterie (20), et un contrôleur principal (18), lesquels sont en liaison les uns avec les autres par le biais d'un canal de communication (24), et le système d'équilibrage d'état de charge (22) possédant un certain nombre de résistances d'équilibrage d'état de charge (30), lesquelles sont mises en services par le biais des contrôleurs de capteur (17) pour un équilibrage d'état de charge des cellules de batterie (19),
**caractérisé en ce que** les contrôleurs de capteur (17) enregistrent des informations à propos des équilibrages d'état de charge effectués dans des premières mémoires non volatiles (34) des contrôleurs de capteur (17),
les informations comprenant des valeurs de fréquence (40) des changements de température pour les résistances d'équilibrage de charge individuelles lors des équilibrages d'état de charge.

2. Procédé selon la revendication 1, **caractérisé en ce que** les informations comprennent des valeurs de période (44) des équilibrages d'état de charge.

3. Procédé selon l'une des revendications précédentes, **caractérisé en ce que** lors de la fin d'un cycle de déplacement, le contrôleur principal (18) détermine le besoin d'équilibrage d'état de charge des cellules de batterie (19), le communique aux contrôleurs de capteur (17) et ensuite se met hors circuit.

4. Procédé selon l'une des revendications précédentes, **caractérisé en ce que** les contrôleurs de capteur (17), à la fin d'un cycle de déplacement, transmettent au contrôleur principal (18) les informations à propos des équilibrages d'état de charge effectués enregistrées dans les premières mémoires non volatiles (34).

5. Procédé selon l'une des revendications précédentes, **caractérisé en ce que** le contrôleur principal (18) enregistre les informations à propos des équilibrages d'état de charge effectués dans une deuxième mémoire non volatile (36).

6. Procédé selon l'une des revendications précédentes, **caractérisé en ce que** le contrôleur principal (18), lors d'un remplacement des résistances d'équilibrage d'état de charge (30), actualise les informations à propos des équilibrages d'état de charge effectués.

7. Programme informatique destiné à mettre en oeuvre un procédé selon l'une des revendications 1 à 6 lorsque le programme informatique est exécuté sur un dispositif informatique programmable.

8. Système de gestion de batterie destiné à surveiller la fonctionnalité des batteries d'un système de batterie (12), qui possède une batterie (16) comprenant plusieurs cellules de batterie (19), les cellules de batterie (19) étant rassemblées en groupes en des modules de batterie et chaque module de batterie (20) possédant un système d'équilibrage d'état de charge, le système de gestion de batterie comprenant plusieurs contrôleurs de capteur (17), qui sont associés aux modules de batterie (20), et un contrôleur principal (18), lesquels sont en liaison les uns avec les autres par le biais d'un canal de communication (24), et le système d'équilibrage d'état de charge (22) possédant un certain nombre de résistances d'équilibrage d'état de charge (30), lesquelles sont mises en services par le biais des contrôleurs de capteur (17) pour un équilibrage d'état de charge des cellules de batterie (19), **caractérisé en ce que** les contrôleurs de capteur (17) possèdent des premières mémoires non volatiles (34) et des unités de commande d'équilibrage d'état de charge (33), les unités de commande d'équilibrage d'état de charge (33) étant conçues pour enregistrer des informations à propos des équilibrages d'état de charge effectués dans les premières mémoires non volatiles (34), les informations comprenant des valeurs de fréquence (40) des changements de température pour les résistances d'équilibrage de charge individuelles lors des équilibrages d'état de charge.

9. Système de batterie (12) comprenant une batterie (16), qui possède plusieurs cellules de batterie (19) et un système d'équilibrage d'état de charge (22), et comprenant un système de gestion de batterie selon la revendication 8.

10. Véhicule automobile (10) comprenant un système de batterie (12), lequel possède une batterie (16), qui possède plusieurs cellules de batterie (19) et qui est équipée d'un système d'équilibrage d'état de charge (22), et un système de gestion de batterie selon la revendication 8.
